# EUROPEAN PATENT APPLICATION

(11) **EP 2 086 135 A1**
(43) Date of publication of application: **05.08.2009**
(21) Application number: 08757662.5
(22) Date of filing: 10.06.2008
(51) Int. Cl.: H04J 3/06

(54) **TIME SYNCHRONIZATION METHOD, EQUIPMENT AND NETWORK COMMUNICATION SYSTEM**

(30) Priority: 12.06.2007 CN 200710110849
(71) Applicant: Huawei Technologies Co., Ltd., Longgang District Shenzhen Guangdong 518129 (CN)
(72) Inventor: HONG, Zhi, Shenzhen Guangdong 518129 (CN)
(74) Representative: Körber, Martin Hans
(86) International application number: PCT/CN2008/071251
(87) International publication number: WO 2008/151566

(57) **Abstract**

A time synchronization method includes the following steps. First, network communication equipment receives time information sent by at least two time servers respectively, in which the time information includes time synchronization status information of each of the time servers. Then, it is determined whether time synchronization status of each of the time servers is normal or not according to the time synchronization status information. Finally, the network communication equipment selects to employ the time information provided by the time servers with the normal time synchronization status from the at least two time servers. Network communication equipment and a network communication system are also provided correspondingly. The network communication equipment is capable of employing the time information provided by the time server with the normal time synchronization status according to the time synchronization status of each of the time servers, thereby improving precision and reliability of the time information obtained by the network communication equipment.

## Description

The application claims priority benefit of Chinese Patent Application No. 200710110849.4, entitled "TIME SYNCHRONIZING METHOD, NETWORK COMMUNICATION SYSTEM AND EQUIPMENT AND TIME SERVER THEREOF ", filed on June 12, 2007. The contents of the above identified applications are all incorporated herein by reference in their entirety.

### FIELD OF THE TECHNOLOGY

The present invention relates to the field of communication technology, and more particularly to a time synchronization method, time synchronization equipment, and a network communication system.

### BACKGROUND

In a communication network, time synchronization means that a time server obtains a standard time e.g., universal coordinated time (UTC) from a time source e.g., a global position system (GPS) and then sends time information to various clients i.e., various network communication equipments that need time synchronization via inter-office/intra-office time distribution links. Currently, international all-purpose time synchronization methods include an inter range instrumentation group (IRIG) time code, network time protocol (NTP), 1 pulse per second (1PPS) and the like, among which the IRIG or NTP is commonly used for a long distance time signal delivery. The IRIG code originates from recording time information for magnetic tapes, which has been widely used as a time delivery standard since 1950s. The NTP is a network time protocol based on an IP network that can only achieve a precision level of millisecond due to being restricted by network traffic, routing, and the like. Currently, the IRIG employs an IRIG-B time code, and it reaches the precision level of nanoseconds, thereby being widely used in time synchronization networks with high precision.

The IRIG-B employs 1KHz sine wave as a carrier frequency to perform amplitude modulation, and encodes the latest 1 second. An IRIG-B data frame includes year, day, hour, minute, second, and control information and the like, and its maximum channel bandwidth is 3 KHz, which thus can be transmitted in buildings via common twisted pairs, or may be transmitted for a long distance via an analog telephone network. A DC level shift (DCLS) is another transmission code form of an IRIG-B code, and uses a DC potential to carry code element information, which is equivalent to envelope of an IRIG-B modulation code.

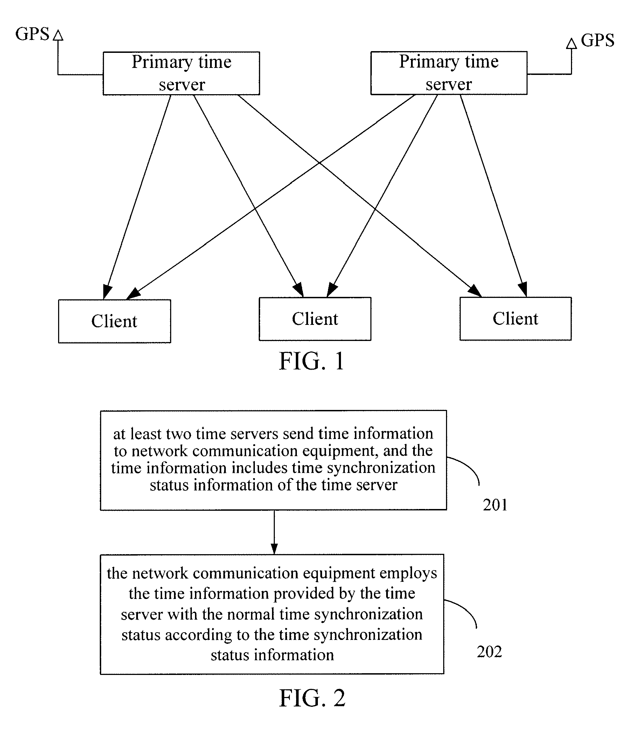

FIG 1 is a schematic view of a time synchronization principle employed in the conventional art. Referring to FIG 1, a primary time server obtains a UTC time from a GPS satellite, and distributes time information to network communication equipment that needs precise time via IRIG-B time codes. Generally, there are at least two time servers considering each other as a backup, which distribute time to each of network communication equipment simultaneously. Each piece of network communication equipment receives the time from a plurality of time servers, and employs the time of one time server only at any time. If the currently used time server is lost, the time of the other time server is employed.

During the research, the inventor(s) finds out that, in the conventional art, only when the time information of one time server is lost, the network communication equipment employs the time information of the other server, but the network communication equipment cannot employ the time information of the other time server, when the time of one time server is not sufficiently precise, for example, the precision of the UTC time obtained by the time server is degraded, thereby reducing the precision and reliability of the time information obtained by the network communication equipment.

### SUMMARY

Accordingly, various embodiments of the present invention provide a time synchronization method, time synchronization equipment, and a network communication system, which are capable of improving accuracy and reliability of time information obtained by the network communication equipment.

A time synchronization method provided in one embodiment of the present invention includes: receiving, by network communication equipment, time information sent by at least two time servers respectively, each piece of the time information including time synchronization status information of the time server.

It is determined that whether time synchronization status of the time servers is normal or not according to the time synchronization status information.

The network communication equipment selects to employ the time information provided by the time server with the normal time synchronization status from the at least two time servers.

Another time synchronization method provided in one embodiment of the present invention includes includes: detecting time synchronization status of a time server; changing a control bit in a time code according to the detected time synchronization status of the time server to generate time synchronization status information of the time server; and sending time information including the time synchronization status information to network communication equipment.

A network communication system provided in another embodiment of the present invention includes at least two time servers and network communication equipment.

The at least two time servers are adapted to send time information, wherein each piece of the time information includes time synchronization status information of the time server respectively.

The network communication equipment is adapted to receive the time synchronization status information sent by the time servers respectively, determine whether time synchronization status of the time servers is normal or not according to the time synchronization status information thereof, and select to employ the time information of the time server with the normal time synchronization status from the at least two time servers.

A time server provided in one embodiment of the present invention includes a time synchronization status information unit and a sending unit.

The time synchronization status information unit is adapted to generate time synchronization status information of a time server.

The sending unit is adapted to send time information including the time synchronization status information generated by the time synchronization status information unit to network communication equipment.

Network communication equipment provided in one embodiment of the present invention includes a receiving unit and a processing unit.

The receiving unit is adapted to receive time information including time synchronization status information sent by time servers.

The processing unit is adapted to determine whether time synchronization status of the time servers is normal or not according to the time synchronization status information received by the receiving unit, and select to employ the time information provided by the time server with the normal time synchronization status.

In the technical solutions provided by the embodiments of the present invention, the time information sent by at least two time servers is received respectively, the time synchronization status of each of the time servers is acquired via the time synchronization status information included in the time information sent by each of the time servers, and the network communication equipment employs the time information provided by the time server with the normal time synchronization status according to the time synchronization status of each of the time servers, thereby improving the accuracy and reliability of the time information obtained by the network communication equipment.

### BRIEF DESCRIPTION OF THE DRAWINGS

The present invention becomes more fully understood by referring to the following drawings for illustration only, which thus is not limitative to the present invention, and wherein:

FIG 1 is a schematic view of a time synchronization principle in the conventional art;

FIG 2 is a flow chart of a time synchronization method according to an embodiment of the present invention;

FIG 3 is a flow chart of a manner for representing time synchronization status in a time synchronization method according to a first embodiment of the present invention;

FIG 4 is a flow chart of a manner for representing time synchronization status in a time synchronization method according to a second embodiment of the present invention;

FIG 5 is a flow chart of a manner for representing time synchronization status in a time synchronization method according to a third embodiment of the present invention; and

FIG 6 is a structure diagram of a network communication system according to an embodiment of the present invention.

### DETAILED DESCRIPTION OF THE EMBODIMENTS

In order to make the technical solution of the present invention more comprehensible, the present invention is further illustrated below in detail with reference to the accompanying drawings and embodiments.

The time synchronization method provided in one embodiment of the present invention includes the following steps.

First, network communication equipment receives time information sent by at least two time servers respectively, and the time information includes time synchronization status information of each of the time servers.

Then, the network communication equipment employs the time information provided by the time servers with the normal time synchronization status according to the time synchronization status information.

FIG 2 is a flow chart of a time synchronization method according to an embodiment of the present invention. Referring to FIG 2, the time synchronization method includes the following steps.

In Step 201, at least two time servers send time information to network communication equipment, and the time information includes time synchronization status information of the time server.

Each of the time servers itself has time synchronization status detecting function, and generates corresponding time synchronization status information according to time synchronization status detecting result.

The specific approach for the time information to carry the time synchronization status information of a time server includes representing time synchronization status of the time server by changing a control bit in a time code.

The time code format employed by the time server is listed as below.
<sync> SS:MM:HH:DDD <control> <binary seconds>
where
- <sync>: is the on -time sync marker
- SS: is the second of the minute [00 to 59(60 during leap seconds)]
- MM: is the minute of the hour (00 to 59)
- HH: is the hour of day in format (00 to 23)
- DDD: is the day of year (001 to 366)
- <control>: is a block of 27 binary cont rol characters
- <binary seconds>: is a 17 b second of day in binary

The control field is formed by 27 bits, among which 3 bits are not assigned, namely, bit 25, bit 26, and bit 27.

Therefore, corresponding information code may be inserted in one or more bits of the three control bits that are not assigned in the above time code to represent the time synchronization status of the time server, or the corresponding information may be inserted in one or more bits that are not used among the rest 24 control bits in the time code to represent the time synchronization status of the time server.

In Step 202, the network communication equipment employs the time information provided by the time server with the normal time synchronization status according to the time synchronization status information, which specifically includes the following steps.

In Step A, the network communication equipment analyzes the time synchronization status information of each of the time servers, and obtains the time synchronization status of each of the time servers.

Because the time servers are configured with different clock sources, they have different time synchronization precisions. For example, the time server configured with a Rubidium clock as an oscillator to track the GPS time has the highest time synchronization precision; and the time server configured with a high level constant-temperature crystal oscillator as an oscillator to track the GPS time has a lower time synchronization precision.

In Step B, it is determined whether the time synchronization status of each of the time servers is degraded or not according to the obtained time synchronization status of each of the time servers, and then the time information provided by the time servers with the normal time synchronization status is employed.

The specific approach for employing the time information provided by the time server with the normal time synchronization status includes: the network communication equipment employs the time information provided by the time server with the highest time synchronization precision among the time servers with the normal time synchronization status according to the configuration of each of the time servers; i.e., if the time synchronization status of each of the time servers is the same, the time information provided by any one of the time servers is employed; otherwise, the time information provided by the time server with the best time synchronization status is employed.

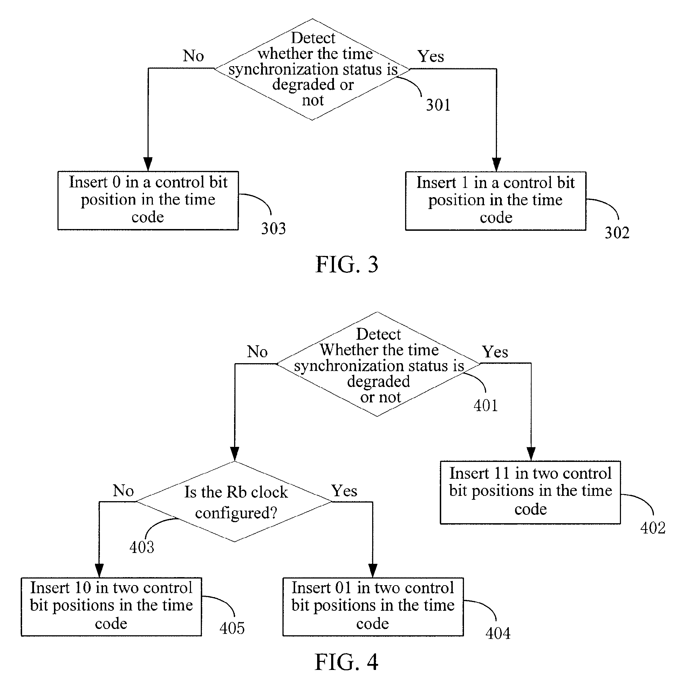

FIG 3 is a flow chart of a manner for representing time synchronization status of each of the time servers in a time synchronization method according to an embodiment of the present invention. Referring to FIG 3, in the embodiment, corresponding information is inserted in a control bit in the time code to represent changes in the time synchronization status of the time server, thereby identifying whether the time synchronization status is degraded or not, which specifically includes the following steps.

In Step 301, it is detected whether the time synchronization status of the time server is degraded or not, in which if the time synchronization status of the time server is degraded, it proceeds with Step 302; otherwise, it proceeds with Step 303.

In Step 302, 1 is inserted in a control bit in the time code to represent that the time synchronization status of the time server is degraded.

The control bit may be any one of the control bit 25, bit 26, or bit 27 that are not assigned, or another bit that is not used among the rest bits in the time code.

In Step 303, 0 is inserted in a control bit in the time code to represent that the time synchronization status of the time server is normal.

The control bit may be any one of the control bit 25, bit 26, or bit 27 that are not assigned, or another bit that is not used among the rest bits in the time code.

Alternatively, other information may be inserted in a control bit in the time code to represent the time synchronization status of the time server.

FIG 4 is a flow chart of a manner for representing time synchronization status of a time server in a time synchronization method according to another embodiment of the present invention. Referring to FIG 4, in this embodiment, corresponding information is inserted in two control bits in the time code to represent the time synchronization status of the time server, which specifically includes the following steps.

In Step 401, it is detected whether the time synchronization status of the time server is degraded or not, in which if the time synchronization status of the time server is degraded, it proceeds with Step 402; otherwise, it proceeds with Step 403.

In Step 402, 11 is inserted in two control bits in the time code to represent that the time synchronization status of the time server is degraded.

The control bits may be any two of the control bit 25, bit 26, or bit 27 that are not assigned, or another two bits that are not used among the rest bits in the time code.

In Step 403, it is determined whether the time server is configured with a Rubidium clock as an oscillator or not, in which if the time server is configured with a Rubidium clock as an oscillator, it proceeds with Step 404; otherwise, it proceeds with Step 405.

According to the time synchronization precisions of the time servers, the time synchronization statuses of the time servers may be classified into three types. The first type is time servers configured with a Rubidium clock as an oscillator to track the GPS time, and such time servers have the highest time synchronization precision; the second type is time servers configured with a high level constant-temperature crystal oscillator as an oscillator to track the GPS time, and such time servers have a lower time synchronization precision; and the third type is time servers configured with an oscillator to track the GPS time, and such time servers have a time synchronization precision lower than that of the above two types, due to the disadvantageous factors such as satellite tracking obstacles or lose lock of the phase locked loop of the time servers, oscillator aging etc., thereby resulting in the degradation of the time synchronization status of the time servers.

In Step 404, 01 is inserted in two control bits in the time code to represent that the time synchronization status of the time server is the best.

The control bits may be any two of the control bit 25, bit 26, or bit 27 that are not assigned, or another two bits that are not used among the rest bits in the time code.

In Step 405, 10 is inserted in two control bits in the time code to represent that the time synchronization status of the time server is better.

The control bits may be any two of the control bit 25, bit 26, or bit 27 that are not assigned, or another two bits that are not used among the rest bits in the time code.

Alternatively, other information may be inserted in two control bits in the time code to represent the time synchronization status of the time server.

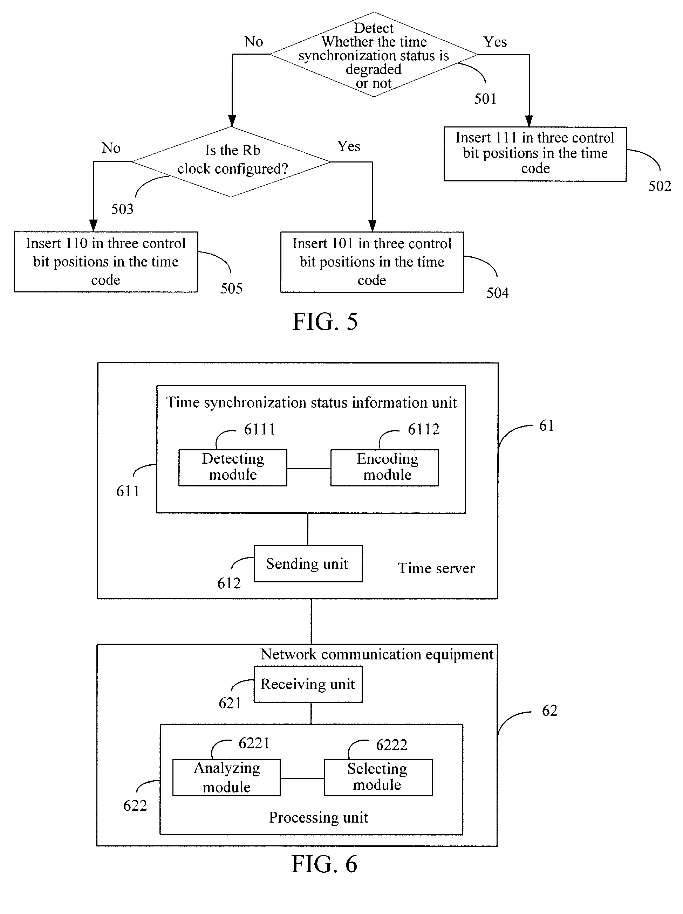

FIG 5 is a flow chart of a manner for representing time synchronization status of a time server in a time synchronization method according to yet another embodiment of the present invention. Referring to FIG 5, in this embodiment, corresponding information is inserted in three control bits in the time code to represent the time synchronization status of the time server, which specifically includes the following steps.

In Step 501, it is detected whether the time synchronization status of the time server is degraded or not, in which if the time synchronization status of the time server is degraded, it proceeds with Step 502; otherwise, it proceeds with Step 503.

In Step 502, 111 is inserted in three control bits in the time code to represent that the time synchronization status of the time server is degraded.

The control bits may be the control bit 25, bit 26, and bit 27 that are not assigned, or any three bits that are not used among the rest bits in the time code.

In Step 503, it is determined whether the time server is configured with a Rubidium clock as an oscillator or not, in which if the time server is configured with a Rubidium clock as an oscillator or not, it proceeds with Step 504; otherwise, it proceeds with Step 505.

According to the time synchronization precisions of the time servers, the time synchronization statuses of the time servers may be classified into three types. The first type is time servers configured with a Rubidium clock as an oscillator to track the GPS time, and such time servers have the highest time synchronization precision; the second type is time servers configured with a high level constant-temperature crystal oscillator as an oscillator to track the GPS time, and such time servers have a lower time synchronization precision; the third type is time servers configured with an oscillator to track the GPS time, and such time servers have the time synchronization precision lower than that of the above two types, due to the disadvantageous factors such as satellite tracking obstacles or lose lock of the phase locked loop of the time server, oscillator aging etc., thereby resulting in the degradation of the time synchronization status of the time server.

In Step 504, 101 is inserted in three control bits in the time code to represent that the time synchronization status of the time server is best.

The control bits may be control bit 25, bit 26, and bit 27 that are not assigned, or any three bits that are not used among the rest bits in the time code.

In Step 505, 110 is inserted in three control bits in the time code to represent that the time synchronization status of the time server is better.

The control bits may be the control bit 25, bit 26, and bit 27 that are not assigned, or any three bits that are not used among the rest bits in the time code.

Alternatively, other information may also be inserted in three control bits in the time code to represent the time synchronization status of the time server.

According to this embodiment of the present invention, the manner of representing the time synchronization status of the time server by inserting other information in three control bits in the time code is capable of representing three time synchronization statuses of the time server more precise and reliable.

The network communication system provided in one embodiment of the present invention includes at least two time servers and network communication equipment. The at least two time servers are adapted to send time information including time synchronization status information of the time server respectively. The network communication equipment is adapted to receive the time information sent from the time servers, determine whether time synchronization status of each of the time servers is normal or not according to the time synchronization status information, and select to employ the time information provided by the time server with the normal time synchronization status from the at least two time servers.

FIG 6 is a structure diagram of a network communication system according to another embodiment of the present invention. Referring to FIG 6, the network communication system includes network communication equipment 62 and at least two time servers 61.

The time server 61 includes a time synchronization status information unit 611 and a sending unit 612. The time synchronization status information unit 611 is adapted to generate time synchronization status information of the time server 61. The time synchronization status information may be represented by inserting corresponding information in a control bit in a time code. The sending unit 612 is adapted to send the time information to the network communication equipment 62. The time information includes the time synchronization status information generated by the time synchronization status information unit 611.

The time synchronization status information unit 611 includes a detecting module 6111 and an encoding module 6112. The detecting module 6111 is adapted to detect time synchronization status of the time server 61. The encoding module 6112 is adapted to change the control bit in the time code according to the time synchronization status of the time server 61 detected by the detecting module 6111, and generate the time synchronization status information of the time server 61.

The network communication equipment 62 includes a receiving unit 621 and a processing unit 622. The receiving unit 621 is adapted to receive the time information including the time synchronization status information sent by the time server 61. The processing unit 622 is adapted to determine whether time synchronization status of the time server is normal or not according to the time synchronization status information received by the receiving unit 621, and select to employ the time information provided by the time server with the normal time synchronization status from the at least two time servers.

The processing unit 622 includes an analyzing module 6221 and a selecting module 6222. The analyzing module 6221 is adapted to analyze the time information received by the receiving unit 621 and obtain the time synchronization status information of the time server 61. The selecting module 6222 is adapted to select to employ the time information provided by the time server with the normal time synchronization status information according to the time synchronization status information of each of the time servers 61 obtained by the analyzing module 6221.

Apparently, it should be understood by persons skilled in the art that, each of the above units, modules, or steps of the present invention may be implemented by general purpose computing devices, which may be concentrated on a single computing device or distributed on a network formed by a plurality of computing devices. Optionally, each of the above units, modules, or steps of the present invention may be implemented by computer-executable program codes, which thus may be stored on storage devices to be executed by computing devices, or may be manufactured into various integrated circuit modules, or implemented by manufacturing a plurality of units, modules, or steps selected from the units, modules, or steps of the present invention as a single integrated circuit module. The present invention is not limited to any particular combination of hardware and software.

Accordingly, with the time synchronization method, the network communication system, the network communication equipment, and the time server according to the embodiments of the present invention, the time synchronization status of a the time server can be acquired according to the time synchronization status information included in the time information sent by the time server, so that the time information of the time server with the normal time synchronization status can be employed according to the time synchronization status of time servers, thereby improving the precision and reliability of the time information obtained by the network communication equipment.

The time synchronization method, the network communication system, the network communication equipment, and the time server of the present invention have been introduced in detail above, and the specific examples are cited to demonstrate the principles and embodiments of the present invention, which are merely intended to facilitate understanding the technical solutions of the present invention. It will be apparent to those skilled in the art that various modifications and variations can be made to the structure of the present invention without departing from the scope of the present invention. Therefore, the content of the specification of the present invention shall not be considered as restricting the present invention.

## Claims

1. A time synchronization method, comprising:
receiving, by network communication equipment, time information sent by at least two time servers respectively, wherein each piece of the time information comprises time synchronization status information of the time server;
determining whether time synchronization status of each of the time servers is normal or not according to the time synchronization status information; and
selecting, by the network communication equipment, to employ the time information provided by a time server with the normal time synchronization status from the at least two time servers.

2. The time synchronization method according to claim 1, wherein the time synchronization status information is represented by at least one control bit in a time code.

3. The time synchronization method according to claim 1, further comprising:
employing, by the network communication equipment, the time information provided by the time server with a highest time synchronization precision from the time server with the normal time synchronization status according to an configuration of each of the time servers.

4. The time synchronization method according to claim 3, wherein the step of employing the time information provided by the time server with the highest time synchronization precision further comprises:
detecting the received time synchronization status information of each of the time servers, selecting to employ the time information provided by any one of the time servers if the time synchronization status of each of the time servers is the same; otherwise, selecting to employ the time information provided by the time server with the highest time synchronization status.

5. A time synchronization method, comprising:
detecting time synchronization status of a time server;
changing a control bit in a time code according to the detected time synchronization status of the time server to generate time synchronization status information of the time server; and
sending time information comprising the time synchronization status information to network communication equipment.

6. A network communication system, comprising:
at least two time servers adapted to send time information, wherein each piece of the time information comprises time synchronization status information of the time server respectively; and
network communication equipment adapted to receive the time synchronization status information sent by each of the time servers, determine whether time synchronization status of each of the time servers is normal or not according to the time synchronization status information, and select to employ the time information provided by the time server with the normal time synchronization status from the at least two time servers.

7. The network communication system according to claim 6, wherein the time server comprises:
a time synchronization status information unit adapted to generate the time synchronization status information of the time server; and
a sending unit adapted to send the time information to the network communication equipment, wherein the time information comprises the time synchronization status information generated by the time synchronization status information unit.

8. The network communication system according to claim 7, wherein the time synchronization status information unit comprises:
a detecting module adapted to detect the time synchronization status of the time server; and
an encoding module adapted to set a control bit in a time code according to the time synchronization status of the time server detected by the detecting module and generate the time synchronization status information of the time server.

9. The network communication system according to claim 8, wherein the network communication equipment comprises:
a receiving unit adapted to receive the time information comprising the time synchronization status information and sent by each of the time servers; and
a processing unit adapted to determine whether the time synchronization status of each of the time servers is normal or not according to the time synchronization status information received by the receiving unit, and select to employ the time information provided by the time server with the normal time synchronization status from the at least two time servers.

10. The network communication system according to claim 9, wherein the processing unit comprises:
an analyzing module adapted to analyze the time information received by the receiving unit to obtain the time synchronization status information of each of the time servers; and
a selecting module adapted to determine whether the time synchronization status of each of the time servers is normal or not according to the time synchronization status information of each of the time servers obtained by the analyzing unit, and select to employ the time information provided by the time server with the normal time synchronization status information from the at least two time servers.

11. A time server, comprising:
a time synchronization status information unit adapted to generate time synchronization status information of a time server; and
a sending unit adapted to send time information to network communication equipment, wherein the time information comprises the time synchronization status information generated by the time synchronization status information unit.

12. The time server according to claim 11, wherein the time synchronization status information unit comprises:
a detecting module adapted to detect time synchronization status of the time server; and
an encoding module adapted to change a control bit in a time code according to the time synchronization status of the time server detected by the detecting unit and generate the time synchronization status information of the time server.

13. A network communication equipment, comprising:
a receiving unit adapted to receive time information comprising time synchronization status information and sent by time servers; and
a processing unit adapted to determine whether time synchronization status of the time servers is normal or not according to the time synchronization status information received by the receiving unit, and select to employ the time information provided by the time server with the normal time synchronization status.

14. The network communication equipment according to claim 13, wherein the processing unit comprises:
an analyzing module adapted to analyze the time information received by the receiving unit to obtain the time synchronization status information of the time servers; and
a selecting module adapted to select to employ the time information provided by the time server with the normal time synchronization status information according to the time synchronization status information of the time servers.
